# EUROPÄISCHE PATENTSCHRIFT

(11) **EP 4 206 814 B1**
(45) Veröffentlichungstag und Bekanntmachung des Hinweises auf die Patenterteilung: **20.08.2025**
(21) Anmeldenummer: 21218234.9
(22) Anmeldetag: 29.12.2021
(51) Int. Cl.: G03B 3/12, G01B 11/12, G01N 21/954

(54) **ROHR- UND KANALINSPEKTIONSVORRICHTUNG**
PIPE AND CHANNEL INSPECTION DEVICE
DISPOSITIF D'INSPECTION DES TUYAUX ET DE CANALISATION

(43) Veröffentlichungstag der Anmeldung: 05.07.2023
(73) Patentinhaber: RITEC Rohrinspektionstechnik GmbH, 87490 Haldenwang (DE)
(72) Erfinder: Riedmiller, Max, 87459 Pfronten (DE); Leibig, Andreas, 87477 Sulzberg (DE)
(74) Vertreter: Bockhorni & Brüntjen Partnerschaft Patentanwälte mbB

(56) Entgegenhaltungen:
- GB-A- 2 573 757
- GB-A- 2 593 497
- KR-B1- 101 664 365
- US-A1- 2004 177 681
- US-B1- 6 249 007

## Beschreibung

### GEBIET DER ERFINDUNG

Die Erfindung betrifft eine Vorrichtung und ein Verfahren zur Inspektion und/oder Reinigung von Rohren und/oder Kanälen.

### STAND DER TECHNIK

Bei der Inspektion und Reinigung von Grundstücksentwässerungsanlagen und angeschlossenen Schacht- und Rohrsystemen gibt es eine Vielzahl praktischer Herausforderungen. Abwasserrohre und -kanäle können einen runden, eiförmigen, maulförmigen, rinnenförmigen oder auch einen rechteckigen oder quadratischen Querschnitt aufweisen, der Querschnitt kann sehr unterschiedliche, weitere Dimensionen aufweisen und sich außerdem in einem zu inspizierenden Rohr- oder Kanalsystem von einem Abschnitt zu einem anderen Abschnitt ändern. Da es kein Tageslicht in den Rohren und Kanälen gibt, ist es außerdem nötig, Leuchtmittel vorzusehen. Ein gängiges Leuchtmittel sind dabei LED-Lampen.

Typischerweise werden zur Inspektion und/oder Reinigung von Rohren und/oder Kanälen Vorrichtungen eingesetzt, welche angetriebene Sonden aufweisen, die kabelgebunden ein Videosignal an ihre Anwender bereitstellen und optional ein Fahrgestell haben. Die Anwender können ebenfalls kabelgebunden Steuersignale and die Vorrichtung senden und die Inspektion koordinieren.

Bildgebende Mittel zum Bereitstellen des Videosignals sind zum Beispiel Kameras. Zum Fokussieren der Kameras gibt es verschiedene Ansätze, die jeweils ihre eigenen Vor- und Nachteile mit sich bringen. Die meisten Ansätze verwenden eine ansteuerbare Linse, wie zum Beispiel eine motorisierte Fokussiereinrichtung oder eine Flüssiglinse. Die ansteuerbaren Linsen werden in Kombination mit einer Steuereinheit verwendet, welche den Fokus vorgibt und einstellt.

Um ein gutes Bild zu liefern, mit welchem ein Anwender die Inspektion oder Reinigung angemessen durchführen und koordinieren können, ist es wichtig, dass die Kamera richtig fokussiert wird. Als Fokussiersystem kann beispielsweise ein Autofokussystem der Kamera verwendet werden. Dieses erfordert jedoch ein wiederholtes Erfassen von Bildern und Auswertung deren Bildschärfe. Um einen andauernden Fokus aufrecht zu erhalten, muss dies mehrmals in der Sekunde passieren, was den Bedarf an Rechenleistung der Vorrichtung erhöht und im Falle der Rohrumgebung zu ständigen Nachfokussierungen führt. Wird die Berechnungen an einer Basisstation durchgeführt, zieht dies den Nachteil einer Verzögerung mit sich, und zwar insbesondere durch die Notwendigkeit einer Signalwandlung. Da bei der Rohrund Kanalinspektion Glasfaserkabel aufgrund der dauerhaften Biegebeanspruchung im Allgemeinen nicht von Vorteil sind, ergibt sich eine weitere Signalverzögerung durch Signalverzögerung durch die benötigte Komprimierung des Videosignals beim Einsatz eines allgemein verwendeten Kupferkabels.

Zur Inspektion und Reinigung von Rohren und Kanälen ist es vorteilhaft, auf die seitlichen Wände in einem gewissen Abstand scharf zu stellen, wenn sich kein Objekt unmittelbar vor der Kamera befindet. Aufgrund unterschiedlicher Rohr- und Kanaldurchmesser, für die die Vorrichtung geeignet sein muss, ist es dabei nicht möglich, einfach einen Standardabstand für den Fokus einzustellen. Beispielsweise ist bei einem Rohrdurchmesser von 5 cm ein Fokus auf 10 cm vorteilhaft, und bei einem Rohrdurchmesser von 60 cm ein Fokus auf 120 cm.

Aus EP 2 975 455 A1 ist beispielsweise eine optische Abstandsmessvorrichtung bekannt, die parallel zu einer Kamera ausgerichtet ist, welche eine Flüssiglinse aufweist. Die optische Abstandsmessvorrichtung ermöglicht das Fokussieren auf Objekte, die sich in geradliniger Richtung vor der Kamera befinden. Was jedoch in EP 2 975 455 A1 nicht gelöst wird ist das Fokussieren bei langen Rohren und Kanälen. Bei langen Rohren bzw. Kanälen ist oftmals keine Reflektion mehr zu messen, sodass die Fokussierung fehlschlägt.

Um ein gutes Bild zu liefern, mit dem Anwender die Inspektion oder Reinigung angemessen durchführen und koordinieren können, ist es außerdem wichtig, dass die Kamera im Rohr gut ausgerichtet ist. In EP 2 975 455 A1 wird dies erreicht, indem die Achse der Kamera auf die Mittelachse des Kanalrohres gesetzt wird, und zwar durch einen mechanischen Hebearm, der zwischen Kamerakopf und Fahrgestell angeordnet ist, und durch einen senkrecht zur Fahrtrichtung angeordneten Abstandssensor. Den mechanischen Hebearm zum Zentrieren des Kamerakopfs im Abwasserkanal zu verwenden ist aber unbefriedigend. Die maximale Höhe des Hebearms kann bei großen Rohrdurchmessern nicht genügen, um die Kamera auf die Höhe des Rohrradius zu heben. Da der Durchmesser der Rohre in einem Kanalrohrsystem stark variieren kann, kann der benötigte Bauraum des mechanischen Hebearms die Vorrichtung außerdem zu groß für kleine Rohre machen.

GB 2 573 757 A zeigt eine Vorrichtung zur Inspektion und/oder Reinigung von Rohren und/oder Kanälen nach dem Oberbegriff des Anspruchs 1. Weitere Inspektionsvorrichtungen sind aus US 2004/177681 A1 und KR 101 664 365 B1 bekannt.

### AUFGABE DER ERFINDUNG

Aufgabe der Erfindung ist es, eine Vorrichtung und ein Verfahren zur Inspektion und/oder Reinigung von Rohren und/oder Kanälen bereitzustellen, die ein vorteilhaftes Fokussierverhalten, robustes Verhalten und eine Anwendbarkeit bei unterschiedlichen Rohr- und Kanaldurchmessern aufweist. Des Weiteren ist vorteilhaftes Ausleuchtverhalten, insbesondere eine gleichmäßige Ausleuchtung des zu inspizierenden Rohr- oder Kanalabschnitts wichtig, um die Kamera nicht zu überblenden und ausreichend Kontrast und Schärfe des Videosignals zu ermöglichen.

### OFFENBARUNG DER ERFINDUNG

Die Aufgabe wird erfindungsgemäß gelöst durch eine Vorrichtung und ein Verfahren zur Inspektion und/oder Reinigung von Rohren und/oder Kanälen mit den Merkmalen der unabhängigen Ansprüche. Vorteilhafte Weiterbildungen der Erfindung sind in den Unteransprüchen angegeben.

Bei einer Vorrichtung zur Inspektion und/oder Reinigung von Rohren und/oder Kanälen, umfassend eine Sonde und zumindest eine Messvorrichtung zum Messen einer Rohr- oder Kanalgeometrie und zum Messen eines Abstands der Sonde zu einem im Rohr oder Kanal befindlichen Objekt, ist vorgesehen, dass die Sonde mit zumindest einer Kamera bestückt ist und die Messvorrichtung an eine Steuereinrichtung gekoppelt ist. Die Messvorrichtung ist mit zumindest einem TOF-Sensor ausgestattet, und die Steuereinrichtung ist eingerichtet, um eine an die Steuereinrichtung gekoppelte Fokussiereinheit der Kamera und/oder eine Beleuchtungseinheit anhand von Messdaten des TOF-Sensors einzustellen.

Zur Fokussierung der Kamera sieht die Erfindung die Verwendung eines TOF (Time-Of-Flight) Sensors vor, anhand dessen Messdaten die Rohr- oder Kanalgeometrie bestimmt und beispielsweise ein Rohrdurchmesser abgeleitet werden kann. Zugleich mit der Rohr- oder Kanalgeometrie misst der TOF-Sensor Abstände zu etwaigen im Rohr oder Kanal befindlichen Objekten. Anordnung und Erfassungsbereich des TOF-Sensors sind dementsprechend gewählt, dass sowohl die Rohr- oder Kanalwandung als auch etwaige im Rohr bzw. Kanal befindliche Objekte erfasst werden können.

Im Folgenden wird die Erfindung verkürzt im Zusammenhand mit Rohren beschrieben, wobei dies nicht einschränkend ist. Vielmehr ist eine Anwendung der Lehre auch bei jeglicher Art von Kanälen möglich. Abwasserkanäle, Anschlusskanäle, Abwasserleitungen und Grundleitungen werden nachfolgend zusammenfassend als Kanäle bezeichnet. Querschnittsformen von Rohren umfassen typischerweise Kreisquerschnitte, Eiquerschnitte, Maulquerschnitte oder Rinnenquerschnitte. Kanäle können typischerweise Kreisquerschnitte, Eiquerschnitte, Maulquerschnitte oder Rinnenquerschnitte aufweisen, aber auch rechteckige oder quadratische Querschnitte aufweisen und auch z.B. oberseitig geöffnet sein. Anwendungen der Erfindung liegen insbesondere in der Inspektion von Kanal- oder Abwasserrohren, Trinkwasserleitungen, Gasleitungen, Lüftungsanlagen, Kabelkanälen und dergleichen. Weiterhin können auch Behälter, allgemein Hohlräume und im Industriebereich insbesondere Turbinen, Motoren und Getrieben, usw. mit der erfindungsgemäßen Vorrichtung und Verfahren vorteilhaft inspiziert werden.

Der TOF-Sensor kann als eine TOF-Kamera mit einem 3D-Kamerasystem ausgebildet sein, welches mittels eines Laufzeitverfahrens (Time of Flight, TOF) Distanzen messen kann. Im Erfassungsbereich des TOF-Sensors wird für jeden Bildpunkt die Entfernung zum abgebildeten Objekt bestimmt. Der TOF-Sensor umfasst eine Lichtaussendeeinheit, beispielsweise LEDs oder Laserdioden, sowie eine Empfangseinheit mit einer Optik, welche das von der Umgebung reflektierte Licht einsammelt und die Umgebung auf einen Bildsensor abbildet. Durch eine geeignete, an sich bekannte Ansteuerelektronik wird für jeden Bildpunkt nicht nur die Intensität des Lichts, sondern auch die Laufzeit des Lichts festgestellt, wodurch für jeden Bildpunkt des Bildsensors Abstandsdaten zur Verfügung stehen. Somit ist der TOF-Sensor in der Lage, sowohl die Rohrgeometrie als auch den Abstand der Sonde zu einem im Rohr befindlichen Objekt gleichzeitig zu messen. Besonders vorteilhaft sind die Messgeschwindigkeiten des TOF-Sensors, welche bis zu 500 oder 1000 Bildern pro Sekunde reichen und somit Information quasi in Echtzeit bereitstellen.

Aus der ermittelten Rohrgeometrie, insbesondere Rohrdurchmesser, kann entweder durch eine Lookup-Tabelle oder eine Formel in der Steuereinrichtung ein gewünschter Fokusabstand ermittelt werden, auf den die Kamera einstellbar ist oder eingestellt wird, wenn kein Objekt im Rohr identifiziert wird. Wird beispielsweise ein neuer Rohrabschnitt erkannt, an dem sich die Rohrgeometrie verändert, kann die Steuereinrichtung dies idealerweise in Echtzeit erkennen und einen neuen gewünschten Fokusabstand ausgeben. Somit ist Vorrichtung in der Lage, Rohrsysteme mit verschiedenen und variierenden Rohrdurchmessern zu durchqueren und zu inspizieren.

Zweckmäßig können sowohl vor dem Sendeteil als auch vor dem Empfangsteil des TOF-Sensors eine Optik, insbesondere Linsen, verbaut sein, um den Erfassungsbereich des TOF-Sensors optimal zur Erfassung der Rohrgeometrie und zur Erfassung vom im Rohr befindlichen Objekten abzustimmen. Die Optik ist bevorzugt steuerbar, so dass der Blickwinkel des TOF-Sensors entsprechend eingestellt werden kann. Der Blickwinkel des TOF-Sensors ist bevorzugt zwischen 50° und 90°, insbesondere im Bereich von 65° bis 75°.

Die Übertragung des Videosignals erfolgt bevorzugt über Kupferkabel und entsprechende Signalwandlerelemente, welche aus dem Stand der Technik bekannt sind. Das System ist somit robuster als auf Glasfaser basierende Systeme, da die Biegebeständigkeit von Kupferkabeln im Allgemeinen höher ist als von Glasfaserkabeln.

Der TOF Sensor kann entweder im Fahrgestell oder vorzugsweise im Kamerakopf angeordnet sein. Bevorzugt liegt der Messbereich des TOF-Sensors im Blickfeld der Kamera, was es dem Anwender erleichtert, einen Zusammenhang zwischen den Messdaten des TOF-Sensors und dem Videobild herzustellen. Der TOF-Sensor kann zu diesem Zweck insbesondere in einem Winkel geneigt zu einer optischen Achse einer der Kamera vorgelagerten Linse ausgerichtet sein.

Die Kamera kann als Axialkamera nicht drehbar an der Sonde gelagert sein.

Die Kamera ist in einer vorteilhaften Ausführungsform um eine zu einer Hauptachse der Sonde senkrecht stehende erste Drehachse dreh- oder schwenkbar an der Sonde gelagert. Dabei kann die Steuereinrichtung abhängig von der ermittelten Rohrgeometrie den Kamerakopf um die erste Drehachse drehen. Die Dreh- oder Schwenkbarkeit der Kamera um die erste Drehachse kann genutzt werden, um die Kamera in Richtung einer Rohrwandung abzuwinkeln, so dass der Blickwinkel der Kamera einen Bereich einer Rohrwandung näher erfasst.

Alternativ oder zusätzlich dazu kann die Kamera um eine in Hauptachse der Sonde verlaufende zweite Drehachse dreh- oder schwenkbar an der Sonde gelagert sein. Die Steuereinrichtung kann abhängig von der Rohrgeometrie den Kamerakopf um die zweite Drehachse drehen. Die Dreh- oder Schwenkbarkeit der Kamera um die zweite Drehachse ist vorteilhaft, um das Kamerabild unabhängig von der Lage und Ausrichtung der Sonde im Rohr horizontal auszurichten, damit ein Anwender in der Lage ist, oben, unten, links und rechts im Bild korrekt zu identifizieren.

Die vorliegende Erfindung schafft es insbesondere durch einen um die horizontale Achse dreh- oder schwenkbaren Kamerakopf, den Bauraum, die Komplexität und die Fehleranfälligkeit des Rohrinspektionssystems zu minimieren. Das Kippen der Kamera erlaubt es bei verschiedenen Rohrdurchmessern nutzbare Bilder aus adäquaten Perspektiven bereitzustellen.

Der Kippwinkel kann abhängig von der Rohrgeometrie von der Steuereinrichtung gesteuert werden.

Besonders vorteilhaft ist eine Vorrichtung, deren Kamera sowohl um die erste Drehachse als auch um die zweite Drehachse dreh- oder schwenkbar an der Sonde gelagert ist. Mittels Drehung um die zweite Drehachse kann insbesondere die Lage der ersten Drehachse im Raum festgelegt werden. Durch Einstellung der zweiten Drehachse kann die erste Drehachse beispielsweise vertikal ausgerichtet werden. Hierdurch ist es möglich, dass die Kamera beispielsweise in seitliche Abzweigungen des Rohres ausgerichtet werden kann, um eine Inspektion zu ermöglichen. Außerdem kann die erste Drehachse horizontal ausgerichtet werden, um die Kamera nach oben oder nach unten abzuwinkeln. Im typischen Fall, wenn die Sonde sich nicht in der Rohrmitte, sondern aufgrund eines großen Rohrdurchmessers unterhalb dieser befindet, kann die Kamera schräg nach oben abgewinkelt werden, damit sowohl die untere Rohrwandung als auch die obere Rohrwandung gleichmäßig ausleucht- und inspizierbar sind.

Vorteilhaft benötigt die Vorrichtung nicht zwangsläufig weitere Sensoren, um einen Abstand der Sonde zur Rohrwandung zu bestimmen. Der TOF-Sensor ermöglicht die gleichzeitige Erfassung der Rohrwandung und im Rohr befindliche Objekte.

In einer vorteilhaften Ausführungsform umfasst die Vorrichtung dennoch zumindest eine weitere Abstandsmessvorrichtung, welche einen weiteren TOF-Sensor und/oder einen kapazitiven oder optischen Sensor, bevorzugt eine Vielzahl ringförmig um eine Hauptachse der Sonde angeordneter TOF-Sensoren, umfasst, wobei die Steuereinrichtung eingerichtet ist, um die Fokussiereinheit und/oder die Beleuchtungseinheit auch anhand von der weiteren Abstandsmessvorrichtung ermittelter Messdaten einzustellen. Die Vorrichtung kann also einen oder mehrere TOF-Sensoren umfassen, und zusätzlich einen oder mehrere weitere, insbesondere kapazitive oder optische Abstandsmesssensoren. Die weitere Abstandsmessvorrichtung kann auch einen oder mehrere "einfache" TOF-Sensor umfassen, welche kein 3D-Bild liefern, sondern lediglich einen Abstand des Sensors zu einem Objekt in Richtung des vom TOF ausgesendeten Lichtimpulses in Form eines Zahlenwerts erfassen und ausgeben.

Vorteilhaft kann dabei vorgesehen sein, dass die erste Abstandsmessvorrichtung an einem nicht drehbar gelagerten Teil der Vorrichtung angeordnet ist und die zweite Abstandsmessvorrichtung an einem drehbar gelagerten Teil der Vorrichtung angeordnet ist oder umgekehrt. Die weiteren Messdaten können vorteilhaft zur Plausibilisierung von Messergebnissen des ersten TOF-Sensors verwendet werden, im Falle mehrerer TOF-Sensoren insbesondere zur Erstellung eines sogenannten Bild-Stacks der Umgebung und/oder um ein originalgetreues 3D-Bild von dem zu inspizierenden Rohr zu erhalten.

Die Fokussiereinheit umfasst zumindest eine mechanisch und/oder magnetisch verstellbare Linse oder eine Flüssiglinse zur Einstellung des Fokus. Dem Fachmann sind hierbei eine Vielzahl von Ausführungsformen aus dem Stand der Technik bekannt, sodass hierauf nicht näher eingegangen wird.

Um Interferenzerscheinungen und Störsignalen vorzubeugen, wird beim TOF-Sensor bevorzugt eine Beleuchtungseinheit eingesetzt, welche ein Licht in einem Teil des elektromagnetischen Spektrums aussendet, das verschieden von einer Beleuchtungseinheit der Kamera ist. Beispielsweise verwendet die Beleuchtungseinheit der Kamera Licht im sichtbaren Bereich von 400 nm bis 700 nm Wellenlänge und die Beleuchtungseinheit des TOF-Sensors Licht im Infrarotbereich mit einer Wellenlänge von größer 700 nm, insbesondere von 780 bis 3000 nm.

In bevorzugten Ausführungsformen ist vorgesehen, dass die Beleuchtungseinheit eine oder mehrere Lichtquellen umfasst und die Steuereinrichtung dazu eingerichtet ist, um die Helligkeit der Lichtquelle oder Lichtquellen einzeln oder in Gruppen selektiv anhand der Messdaten des TOF-Sensors einzustellen und/oder die Lichtquelle oder Lichtquellen einzeln oder in Gruppen anhand der Messdaten des TOF-Sensors an- und auszuschalten. Besonders bevorzugt umfasst die Vorrichtung eine Vielzahl von Lichtquellen, welche beispielsweise, aber nicht einschränkend ringförmig um die Kamera herum an der Sonde angeordnet sein können.

Einzelne Lichtquellen oder Gruppen von Lichtquellen können gedimmt oder erhellt werden, um die Helligkeit der ihnen zugewandten Rohrsegmente im Kamerabild zu steuern. Dies dient dem Zweck der adaptiven Ausleuchtung der Rohrumgebung. Eine ausgeglichene Ausleuchtung des von der Kamera erfassten Umgebung erlaubt eine Verbesserung der Kontraste und Schärfe des Videobildes. Wird der Kamerakopf in der Mitte des Rohres angeordnet, so ist oftmals eine gute Ausleuchtung des Rohres durch Symmetrie gegeben. Würden alle Lichtquellen gleich stark leuchten, so würde dies aber zum Beispiel bei nicht-zentrierter Lage der Kamera im Rohr zur Folge haben, dass eine weiter entfernte Rohrhälfte zu schwach beleuchtet wird, wobei eine nahe Rohrhälfte zu stark beleuchtet wird und die Kamera überblendet, sodass die Kamerablende reagiert und das gesamte Bild zu dunkel wird. Entsprechend kann vorgesehen sein, dass bei ringförmig um die Kamera herum angeordneten Lichtquellen die Steuereinrichtung dazu eingerichtet ist, um Ringsegmente mit mehreren Lichtquellen an- und auszuschalten oder zu erhellen oder zu dimmen.

Alternativ oder zusätzlich hierzu kann eine erste Gruppe von Lichtquellen zur Ausleuchtung eines Nahbereichs vorgesehen sein und eine zweite Gruppe von Lichtquellen zur Ausleuchtung eines Fernbereichs. Die Gruppen können sich durch eine vorgelagerte Strahlformungsoptik unterscheiden, wobei im Nahbereich eine streuende Optik, z.B. unter Verwendung von konkaven Linsen vorgelagert ist, um diffuses Licht zu erzeugen, und wobei im Fernbereich keine oder eine fokussierende Optik z.B. unter Verwendung von konvexen Linsen vorgelagert ist. Wird auf den Nahbereich fokussiert, dann kann die zweite Gruppe von Lichtquellen zur Ausleuchtung des Fernbereichs ausgeschaltet werden. Wird auf den Fernbereich fokussiert, dann kann die erste Gruppe von Lichtquellen zur Ausleuchtung des Nahbereichs ausgeschaltet werden. Entsprechend kann die Steuereinrichtung dazu eingerichtet sein, um die Strahlformungsoptik des Lichts der Lichtquellen adaptiv einzustellen.

Gängige Lichtquellen für den Nahbereich sind LEDs. Im Fernbereich können LEDs, aber auch Laserlicht, z.B. von Laserdioden verwendet werden, insbesondere auch in Kombination mit LEDs.

Bevorzugt ist die Vielzahl von Lichtquellen, zum Beispiel LEDs oder Laservorrichtungen wie Laserdioden, die einzeln oder in Gruppen angesteuert werden können, an der Sonde angeordnet. Die Lichtquelle oder Lichtquellen sind insbesondere bevorzugt dreh- und/oder schwenkbar an der Sonde gelagert. Alternativ kann auch vorgesehen sein, einzelne Lichtquellen der Vielzahl von Lichtquellen ortsfest an einem Fahrgestell eines Inspektionswagens und/oder an einem Hebearm des Inspektionswagens und/oder an einem nicht drehbar gelagerten Teil der Sonde und/oder an einem nur einfach drehbar gelagerten Teil der Sonde und/oder an einem im oben beschriebenen Sinne zweifach drehbar gelagerten Teil der Sonde verteilt anzuordnen. Dabei ist die Steuereinrichtung dazu eingerichtet, um die Lichtkegel der Lichtquelle bzw. Lichtquellen räumlich auszurichten. Somit kann die Steuereinrichtung abhängig von der Rohrgeometrie und vom Blickwinkel des Kamerakopfes die Lichtquellen für eine ausgeglichen Ausleuchtung ansteuern.

Das Steuern des Winkels des Kamerakopfes und die Steuerung der LEDs kann ebenfalls durch Lookup-Tabellen oder durch Formeln geschehen. Bei der Steuerung der LEDs kann vorteilig ein Regelkreis verwendet werden, da die Helligkeit des Bildes beispielsweise von den optischen Eigenschaften der Rohrwände und der Verunreinigungen im Rohr abhängig ist.

Bei einer Ausführungsform der Erfindung ist die Sonde an einem Inspektionsfahrzeug angeordnet, um die Sonde durch das Rohr zu bewegen. Dabei ist der TOF-Sensor beispielsweise an einem Fahrgestell des Inspektionsfahrzeugs oder an der Sonde angeordnet. Bei dem Inspektionsfahrzeug kann optional ein an sich bekannter Hebearm vorgesehen sein, an dem die Sonde angeordnet ist. Der Hebearm ist bevorzugt mittels der Steuereinrichtung der Höhe nach verstellbar, um die Sonde in der Mitte des Rohres oder in der Nähe der Mitte des Rohres zu navigieren. Im Falle mehrerer Abstandssensoren, insbesondere TOF-Sensoren, kann vorgesehen sein, die Sensoren am Fahrgestell und/oder am Hebearm und/oder an einem nicht drehbar gelagerten Teil der Sonde und/oder an einem nur einfach drehbar gelagerten Teil der Sonde und/oder an einem zweifach drehbar gelagerten Teil der Sonde verteilt anzuordnen.

Bei einer alternativen Ausführungsform ist die Sonde an einem in das Rohr einführbaren flexiblen Schiebeaal angeordnet, um die Sonde durch das Rohr zu schieben. Der TOF-Sensor ist dabei an der Sonde angeordnet. Im Falle mehrerer Abstandssensoren, insbesondere TOF-Sensoren, kann vorgesehen sein, die Sensoren an einem nicht drehbar gelagerten Teil der Sonde und/oder an einem nur einfach drehbar gelagerten Teil der Sonde und/oder an einem zweifach drehbar gelagerten Teil der Sonde verteilt anzuordnen.

Bei einer noch weiteren alternativen Ausführungsform ist die Sonde an einem in das Rohr oder den Kanal einführbaren, als eine Leitung für ein Druckmittel ausgebildeten Hochdruckschlauch angeordnet, wobei der Hochdruckschlauch und/oder die Sonde an seinem beziehungsweise ihrem Umfang mit Düsen bestückt ist, die durch Ventile gesteuert in druckmittelleitender Verbindung mit einer Druckmittelleitung stehen, um die Sonde durch das Rohr vorzutreiben. In vorteilhaften Weiterentwicklungen der Ausführungsform ist vorgesehen, dass die Sonde zur Navigation im Rohr oder Kanal mit weiteren Düsen bestückt ist. Als Druckmittel wird bevorzugt ein Fluid wie Wasser oder Druckluft eingesetzt. Bei dieser Ausführungsform kann zusätzlich ein Schiebeaal vorgesehen sein, um die Sonde durch das Rohr zu schieben. Während der Schiebeaal beispielsweise mit einem Glasfaserkern biegefest ausgebildet ist, kann der Hochdruckschlauch flexibler ausgestaltet sein. Die Düsen sind bevorzugt in Vorschubrichtung hinter der Kamera angeordnet.

Gerade bei Sonden, die durch das Rohr geschoben werden oder durch ein Druckmittel durch das Rohr vorgetrieben werden, kommt es in den meisten Fällen dazu, dass die Sonde sich außermittig des Rohres befindet, sodass die Erfindung dem Anwender wie oben beschrieben besondere Vorteile verschafft.

Des Weiteren ist ein Verfahren zur Inspektion von Rohren und/oder Kanälen vorgesehen, bei welchem eine der beschriebenen Vorrichtungen eingesetzt wird. Die mit Bezug zur Vorrichtung offenbarten Merkmale sind entsprechend auch für das Verfahren als offenbart anzusehen und umgekehrt.

Bei dem Verfahren wird die mit der Kamera bestückte Sonde in ein Rohr eingeführt und die Fokussiereinheit der Kamera anhand der Messdaten des TOF-Sensors gesteuert, so dass bei einem vom TOF-Sensor detektierten im Rohr befindlichen Objekt der Fokus der Kamera auf das Objekt eingestellt wird oder auf das Objekt einstellbar ist und der Fokus der Kamera auf einen Bereich an einer Rohrwandung eingestellt wird oder einstellbar ist, wenn der TOF-Sensor kein im Rohr befindliches Objekt detektiert.

Alternativ oder zusätzlich hierzu ist vorgesehen, dass die Beleuchtungseinheit anhand der Messdaten des TOF-Sensors gesteuert wird.

Die Vorrichtung kann entsprechend mit einer Art Autofokussystem ausgestattet sein, bei welcher der Fokus stets auf das im Rohr befindliche Objekt eingestellt wird, sofern vorhanden, und stets auf einen Bereich der Rohrwandung eingestellt wird, falls kein Objekt im Rohr vorhanden ist. Alternativ kann vorgesehen sein, dass dem Anwender mittels einer Schnittstelle angeboten wird, die Kamera auf ein im Rohr befindliches Objekt zu fokussieren oder alternativ auf den Bereich an der Rohrwandung zu fokussieren. Es kann vorgesehen sein, dass der Anwender eine vorgeschlagene Fokussierung manuell nachregeln kann.

Vorteilhaft kann eine Bildverarbeitungssoftware verwendet werden, welche fokussierbare im Rohr befindliche detektierte Objekte und/oder einen fokussierbaren Bereich der Rohrwandung auf dem Videobild für den Anwender grafisch hervorhebt.

Aus den Messdaten des TOF-Sensors wird bevorzugt ein Abstand der Sonde zur Rohrwandung ermittelt, und zwar anhand Extrapolation der Messdaten des TOF-Sensors, zum Beispiel unter Annahme eines gleichmäßig verlaufenden Rohrdurchmessers. Aus den Messdaten des TOF-Sensors kann auch ein Rohrdurchmesser ermittelt werden und/oder eine Kategorie des Rohrquerschnitts als Kreisquerschnitt, Eiquerschnitt, Maulquerschnitt oder Rinnenquerschnitt. Der Abstand zur Rohrwandung und ggf. ermittelter Rohrdurchmesser und/oder Rohrquerschnitt können einem Anwender als Daten zur Verfügung bereitgestellt werden.

In einer bevorzugten Ausführungsform wird dann, wenn der TOF-Sensor kein im Rohr befindliches Objekt detektiert, der Abstand der Sonde zur Rohrwandung mit einem Faktor größer als 1 und kleiner als 20, bevorzugt größer als 1 und kleiner als 10, weiter bevorzugt größer als 1 und kleiner als 7, noch weiter bevorzugt größer als 2 und kleiner als 5 multipliziert und der Fokus der Kamera auf den so errechneten Wert eingestellt oder einstellbar. Somit wird beispielsweise bei einem Rohrdurchmesser von 5 cm ein Fokus auf 10 cm eingestellt und bei einem Rohrdurchmesser von 60 cm ein Fokus auf 1,20 m eingestellt. Wird eine Kamera mit Zoomfunktion eingesetzt, kann ein aktuell verwendeter oder eingestellter Zoomfaktor beispielsweise auch mit dem so ermittelten Faktor multipliziert werden.

Bei einer bevorzugten Ausführungsform umfasst die Steuereinrichtung ein erstes Bilderkennungssoftwaremodul, welches eingerichtet ist, um anhand der Messdaten des TOF-Sensors Deformationen, Unregelmäßigkeiten, Krümmer, Bögen und/oder Abzweigungen des Rohrs und/oder Rohrverengungen oder Rohraufweitungen zu erkennen. Deformationen, Unregelmäßigkeiten, Krümmer, Bögen und/oder Abzweigungen des Rohrs sowie Rohrverengungen oder Rohraufweitungen können im Rahmen vorliegenden Offenbarung als im Rohr befindliche Objekte verstanden werden. Der Fokus der Kamera wird eingestellt beziehungsweise ist einstellbar auf einen Abstand zu einer erkannten Deformation, Unregelmäßigkeit, Krümmer, Bogen, Abzweigung, Rohrverengung oder Rohraufweitung. Diese können vom Anwender speziell inspiziert werden. Des Weiteren kann die Beleuchtung einer erkannten Deformation, Unregelmäßigkeit, eines Bogens, Krümmers, einer Abzweigung, Rohrverengung oder Rohraufweitung verstärkt oder verringert werden bzw. verstärkbar oder verringerbar sein.

Typischerweise wird dem Anwender das Kamerabild ausgebeben. Es kann vorgesehen sein, das Video der Inspektion zu speichern oder weiterzuverwenden, beispielsweise um ein computergestütztes 3D-Modell des inspizierten Rohres zu erzeugen. Auch die Daten des TOF-Sensors können gespeichert oder weiterverwendet werden, um ein computergestütztes 3D-Modell des inspizierten Rohres zu erzeugen. Die Video- und TOF-Daten können mittels geeigneter Software auch überlagert werden. Durch die automatisierte oder per Interaktion mit dem Anwender gesteuerte Fokussierung und Ausleuchtung des Kamerabildes weist das 3D-Modell an entscheidenden Stellen, gerade bei entdeckten im Rohr befindlichen Objekten, Deformationen, Unregelmäßigkeiten, Krümmer, Bögen, Abzweigungen, Rohrverengungen und Rohraufweitungen einen besonders hohen Detailierungsgrad auf, sodass der Anwender optimal in die Lage versetzt wird, Schäden oder notwendige Reparaturen am Rohr zu erkennen und zu beseitigen. Sämtliche Daten können mit die Rohrgeometrie beschreibenden Daten ergänzt werden, insbesondere Daten in Bezug auf den Rohrdurchmesser und Rohrquerschnitt.

Bei einer mittels Druckmittel angetriebenen und abbiegefähigen Sonde kann aus der Echtzeitdatenerfassung der Lage einer Rohrabzweigung durch den TOF-Sensor außerdem eine gezielte Ansteuerung der Düsen mit Druckmittel errechnet werden, um die Sonde in eine erkannte Rohrabzweigung abbiegen zu lassen. Bezüglich der Details der Anordnung und Ansteuerung der abbiegefähigen Sonden wird auf die Offenbarung in DE 10 2009 057 284 B4 Bezug genommen.

Der TOF-Sensor oder weitere TOF-Sensoren erfassen nach einer bevorzugten Ausführungsform eine Rohrsohle, wobei die Signale des TOF-Sensors oder der weiteren TOF-Sensoren ebenfalls an die Steuereinrichtung übermittelt werden. Die Steuereinrichtung kann mit einer Absturzwarneinheit ausgestattet sein, welche ein Signal ausgibt, wenn in der Rohrsohle eine Abzweigung oder eine Unregelmäßigkeit erkannt wird. Alternativ oder zusätzlich hierzu kann die Steuereinrichtung ein zweites Bilderkennungssoftwaremodul umfassen, welches eingerichtet ist, einen Füllstand von Flüssigkeit im Rohr zu ermitteln, entsprechende Daten auszugeben. Alternativ oder zusätzlich hierzu kann die Steuereinrichtung ein drittes Bilderkennungssoftwaremodul umfassen, welches eingerichtet ist, eine Spurhaltung der Sondenführung zu ermöglichen.

Durch Echtzeitmessung und intelligente Fokussiersteuerung kann das Rohrinspektionssystem risikolos in unbekannten Umgebungen eingesetzt werden, wobei Abstürze der Sonde und Fehlinterpretationen bei der Lokalisierung von Unregelmäßigkeiten und Abzweigungen im Rohr weitgehend vermieden werden. Insbesondere ist die Vorrichtung vorteilhaft in Rohrsystemen mit veränderlichem Rohrdurchmesser einsetzbar, beispielsweise bei der Inspektion von Grundleitungen und Anschlusskanälen von Grundstücksentwässerungsanlagen. Durch die adaptive Lichtsteuerung und Schwenkbarkeit des Kamerakopfs um eine horizontale senkrecht auf die Rohr- beziehungsweise Sondenhauptachse stehende Achse kann eine kleine Sonde, die sich bei einem großen Rohr nicht in der Mitte befindet, eingesetzt werden, um Anschlussbereiche mit schmalerem Rohrdurchmesser zu inspizieren. Ein Austausch der Sonde zur Inspizierung von z.B. Anschlussrohren mit kleinerem Durchmesser ist damit nicht mehr notwendig.

Im Folgenden wird die Erfindung mit Bezug zu den Figuren beschrieben, wobei die Beschreibung nicht als einschränkend für die Erfindung zu verstehen ist.

### KURZE BESCHREIBUNG DER ZEICHNUNGEN

Es zeigen:
Fig. 1 einen Schnitt durch ein Rohr mit einem darin befindlichen Inspektionsfahrzeug und einem darin befindlichen Objekt;
Fig. 2 ein Monitorbild einer Kamera des Inspektionsfahrzeugs aus Fig. 1;
Fig. 3 einen Schnitt durch ein Rohr mit darin befindlicher Sonde und darin befindlichem Objekt;
Fig. 4 die Sonde in Fig. 3 in veränderter Lage;
Fig. 5 eine Frontansicht auf den Sondenkopf in Fig. 3;
Fig. 6 einen Schnitt durch ein Rohr mit darin befindlicher Sonde im Bereich einer Rohrabzweigung.

### AUSFÜHRUNGSFORMEN DER ERFINDUNG

Im Folgenden wird die Erfindung verkürzt im Zusammenhang mit Rohren beschrieben, wobei dies nicht einschränkend ist. Vielmehr ist eine Anwendung der Lehre auch bei jeglicher Art von Kanälen möglich.

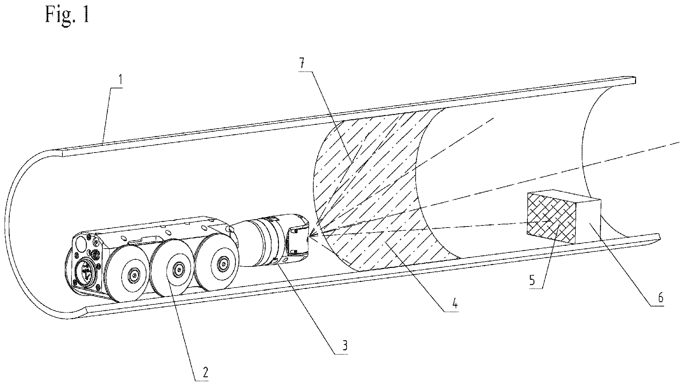

Fig. 1 zeigt einen Abschnitt eines Rohres 1 in Schnittdarstellung. Im Rohr 1 befindet sich eine Vorrichtung zur Inspektion und/oder Reinigung von Rohren nach einer ersten Ausführungsform der Erfindung in Form eines Inspektionsfahrzeugs 2 mit einer daran angeordneten Sonde 3.

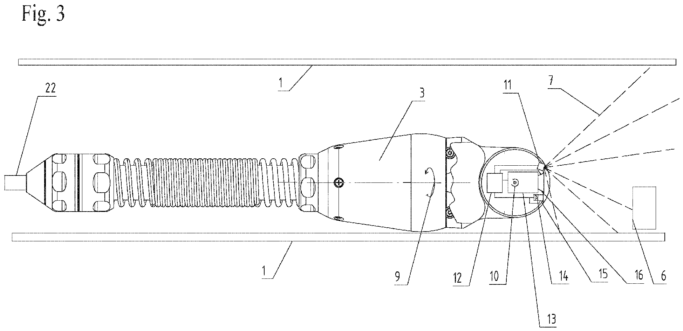

Stirnseitig an der Sonde 3 ist eine Kamera angeordnet, welche in einer Längsrichtung des Rohres 1 nach vorne blickt. Details der Sonde 3 werden mit Bezug zu den Figuren 3 bis 6 im Rahmen der Beschreibung der weiteren Ausführungsbeispiele näher erläutert. Die Einzelheiten der Sonde 3, Kamera, Sensoren und Lichtquellen, sind auf die vorliegende erste Ausführungsform übertragbar.

Die Längsrichtung des Rohres 1 fällt bei der Rohrinspektion typischerweise mit einer Hauptachse der Sonde 3 zusammen. Das Inspektionsfahrzeug 2 ist hier rein beispielhaft mit drei Achsen und sechs Rädern ausgestattet, wobei dies nicht einschränkend für die Erfindung ist. Die Sonde 3 kann an einem mechanischen Hebearm des Inspektionsfahrzeugs 2 befestigt oder starr mit einem Fahrgestell des Inspektionsfahrzeugs 2 verbunden sein.

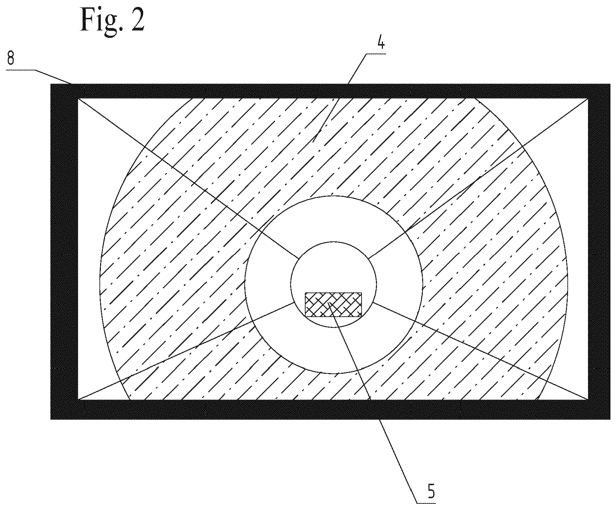

Das Bild der Kamera der Sonde 3 aus Figur 1 ist in Fig. 2 auf einem Monitor 8 dargestellt. Mit Bezugszeichen 4 ist in Fig. 1 und Fig. 2 jeweils ein erster Fokussierungsbereich an einer Rohrwandung dargestellt, wobei im Kamerabild auf dem Monitor 8 der erste Fokussierungsbereich 4 einem äußeren Bereich des Monitorbildes entspricht. Der Fokussierungsbereich 4 liegt im Rahmen eines Erfassungsbereichs 7 eines TOF-Sensors. Ebenfalls im Erfassungsbereich 7 des TOF-Sensors befindet sich das Objekt 6 im Rohr 1. Das Objekt 6 definiert einen zweiten Fokussierungsbereich 5, welcher dem Abstand des TOF-Sensors zum Objekt 6 entspricht. Auf dem Bild des Monitors 8 ist das Objekt 6 in der Nähe der Bildmitte zu sehen.

Der TOF-Sensor ist Teil einer oder bildet eine Messvorrichtung zum Messen einer Rohrgeometrie und zum Messen eines Abstands der Sonde 3 zu dem im Rohr 1 befindlichen Objekt 6. Die Messvorrichtung ist an einer Steuereinrichtung gekoppelt, welche eingerichtet ist, um eine Fokussiereinheit und/oder eine Beleuchtungseinheit der Kamera anhand der Messdaten des TOF-Sensors einzustellen. Die Fokussiereinheit ist typischerweise direkt an die Kamera gekoppelt und umfasst bevorzugt zumindest eine mechanisch und/oder magnetisch verstellbare Linse oder eine Flüssiglinse zur Einstellung des Fokus.

Das Bild des Monitors 8 kann sowohl auf den ersten Fokussierungsbereich 4 als auch auf den zweiten Fokussierungsbereich 5 fokussiert werden. Dies kann entweder durch Einwirkung eines Anwenders erfolgen oder automatisch. Im Falle einer automatischen Fokussierung fokussiert im dargestellten Fall die Vorrichtung bevorzugt stets auf das im Rohr 1 befindliche Objekt 6. Nur wenn kein Objekt 6 erfasst wird, fokussiert die Vorrichtung auf den ersten Fokusbereich 4 an der Rohrwandung. Alternativ kann vorgesehen sein, dass die fokussierbaren Bereiche dem Anwender angezeigt werden, beispielsweise durch optische Hervorhebung oder Markierung des Bereichs, sodass der Anwender den gewünschten zu fokussierenden Bereich manuell, insbesondere beispielsweise durch Bedienen eines Touchscreens, per Maus, Tastatur oder dergleichen auswählt.

Fig. 3 zeigt eine Vorrichtung zur Inspektion und/oder Reinigung von Rohren nach einer zweiten Ausführungsform der Erfindung in Form einer Sonde 3, welche an einem Schiebeaal 22 durch ein Rohr 1 geschoben wird. Der Schiebeaal 22 ist typischerweise ein flexibles Kabel, das eine ausreichende Festigkeit und Biegesteifigkeit aufweist, um die Sonde 3 durch das Rohr 1 zu schieben. Der Schiebeaal 22 enthält wie im Stand der Technik bekannt üblicherweise auch die Elektronik zur Übermittlung des Videosignals einer Kamera 13.

Die Sonde 3 umfasst die Kamera 13 und eine Steuereinrichtung 12, welche mit der Kamera 13 verbunden ist. Über die Steuereinrichtung 12 kann das Videosignal der Kamera 13 an den Anwender weitergegeben werden. Darüber hinaus ist die Steuereinrichtung 12 mit einer Fokussiereinheit 16 gekoppelt, um diese anhand von Messdaten des TOF-Sensors 11 einzustellen. Der Erfassungsbereich 7 des TOF-Sensors 11 ist derart, dass er sowohl eine Rohrgeometrie als auch einen Abstand des TOF-Sensors 11 beziehungsweise der Sonde 3 zu einem im Rohr 1 befindlichen Objekt 6 erfassen kann.

Die Kamera 13 ist um eine zu einer Hauptachse der Sonde 3 senkrecht stehende erste Drehachse 10 drehbar an der Sonde 3 gelagert. Die Kamera 13 ist selbst auf der ersten Drehachse 10 angeordnet, so dass im Rahmen der vorliegenden Offenbarung von einer Drehung und nicht von einer Schwenkung gesprochen wird. Durch Auswertung der Abstandsdaten des TOF-Sensors 11 kann die Kamera 13 mittels Drehung um die erste Drehachse 10 nach oben oder unten angewinkelt werden, so dass beispielsweise sowohl der obere Rohrwandungsabschnitt als auch der untere Rohrwandungsabschnitt auf dem Bild des Monitors 8 gleich weit von der Kamera 13 weg dargestellt werden. Hierdurch kann insbesondere eine einheitliche Beleuchtung des Kamerabildes erreicht werden, wie im Folgenden näher beschrieben wird.

Des Weiteren ist die Kamera 13 um eine zweite Drehachse 9 drehbar an der Sonde gelagert. Da die Kamera 13 auf der zweiten Drehachse 9 angeordnet ist, wird wiederum von einer Drehung und nicht von einer Schwenkung gesprochen.

Durch Drehung der Kamera 13 um die zweite Drehachse 9 kann beispielsweise in Verbindung mit einem in der Sonde 3 angeordneten Schwerkraftsensor (nicht dargestellt) sichergestellt werden, dass die Kamera 13 unabhängig von der tatsächlichen Lage der Sonde 3 im Rohr 1 stets ein Bild ausgeben kann, welches dem Anwender eine Zuordnung der Richtungen oben, unten, links und rechts ermöglicht.

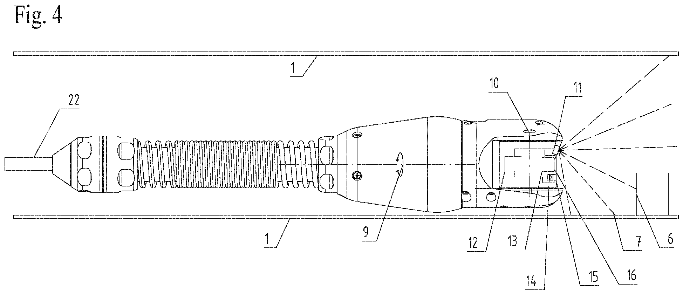

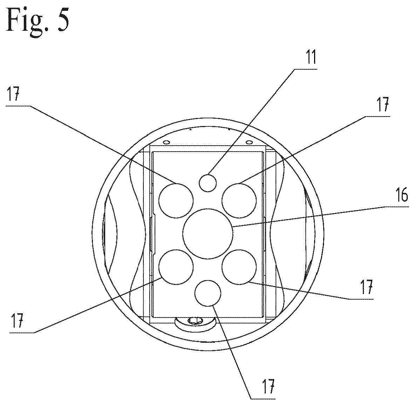

Des Weiteren kann durch Drehung der Sonde 3 um die zweite Drehachse 9 auch die Lage der ersten Drehachse 10 definiert werden. Der Drehgeber kann jeweils in der Sonde 3 verbaut sein. Während in Fig. 3 eine horizontale Lage der ersten Drehachse 10 dargestellt ist, zeigt Fig. 4 eine vertikale Lage der ersten Drehachse 10. Durch Drehung um die erste Drehachse 10 in der in Fig. 4 dargestellten vertikalen Lage kann die Kamera 13 im Rohr 1 zur Seite verdreht werden, beispielsweise zur Inspektion von Abzweigungen, wie mit Bezug zur Fig. 5 näher beschrieben wird.

Die Sonde 3 umfasst zudem im stirnseitigen Bereich eine Beleuchtungseinrichtung 14. Die Beleuchtungseinrichtung 14 ist mit einer optionalen Optik 15 ausgestattet. Mittels der Optik 15 kann eine Beeinflussung des ausgehenden Lichtkegels, insbesondere eine Fokussierung oder eine Aufweitung, von der Steuereinrichtung 12 eingestellt werden.

Fig. 5 zeigt eine Frontansicht auf den Kopf der Sonde 3. Im Zentrum der Sonde 3 ist die Fokussiereinheit 16 der Kamera 13 dargestellt. Um die Kamera 13 sind hier beispielhaft, aber nicht einschränkend vier Lichtquellen 17 angeordnet, welche von der Steuereinrichtung 12 bevorzugt einzeln oder in Gruppen in Bezug auf ihre Helligkeit, besonders bevorzugt auch in Bezug auf die Ausrichtung ihrer Lichtkegel, steuerbar sind. Die Lichtquellen 17 können beispielsweise LED-Lampen oder Laservorrichtungen sein. Die Steuereinrichtung 12 kann beispielsweise die Helligkeit der einzelnen Lichtquellen 17 einzeln oder in Gruppen selektiv anhand der Messdaten des TOF-Sensors 11 einstellen, beispielsweise durch Dimmen oder Erhellen. Alternativ oder zusätzlich hierzu kann die Steuereinrichtung 12 die Lichtquellen 17 einzeln oder in Gruppen anhand der Messdaten des TOF-Sensors 11 an- und ausschalten.

In der dargestellten Ausführungsform sind die Lichtquellen 17 rein beispielhaft aber nicht einschränkend ringförmig um die Kamera 13 herum an der Sonde 3 angeordnet.

Der TOF-Sensor 11 befindet sich neben der Kamera 13 und ist, wie in Fig. 3 ersichtlich, gegenüber der Kamera 13 etwas schräg gestellt, damit die Erfassungsbereiche sich möglichst großflächig überlappen. Die Schrägstellung des TOF-Sensors 11 ist weder zwingend für die Erfindung noch maßstabsgetreu in Fig. 3 dargestellt.

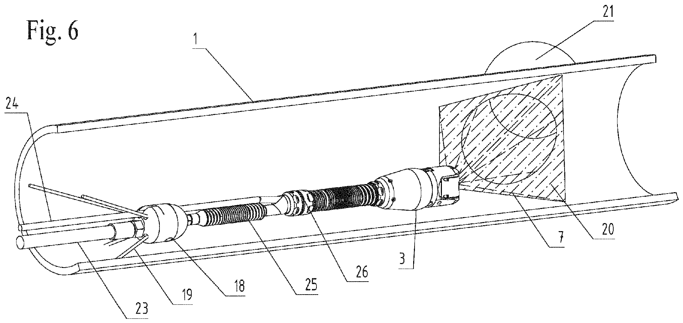

Fig. 6 zeigt eine Vorrichtung zur Inspektion von Rohren nach einer dritten Ausführungsform der Erfindung in Form einer fluidangetriebenen Sonde 3. Ein Hochdruckschlauch 23 dient als eine Leitung für ein Hochdruckmittel und umfasst einen Düsenkopf mit einer Vielzahl von Düsen 18, mittels welcher die Sonde 3 durch das Rohr 1 durch das Rohr 1 vortreibbar ist, wobei aus den Düsen ein Druckmittel wie beispielsweise Wasser oder Druckluft austritt, um die Sonde 3 durch das Rohr 1 vorzutreiben. Die Sonde 3 ist an einem Anschluss 26 lösbar und auswechselbar am Hochdruckschlauch 23 mit dem Düsenkopf befestigt. Zwischen dem Anschluss 26 und dem Düsenkopf ist eine beispielsweise metallische Feder 25 vorgesehen. Über den Anschluss 26 ist außerdem ein Videosignalkabel 24 mit der Sonde 3 verbunden, um das Videosignal der Kamera 13 zu übertragen.

Im stirnseitigen Bereich ist die Sonde 3, wie mit Bezug zu Fig. 3 und 4 beschrieben, ausgebildet. Die Sonde 3 umfasst insbesondere die zweifach drehbar gelagerte Kamera 13 sowie den TOF-Sensor 11. Die Kamera 13 ist in Richtung einer Rohrabzweigung 21 abgewinkelt, so dass ein Erfassungsbereich 20 der Kamera 13 die Rohrabzweigung 21 erfasst. Der Erfassungsbereich 7 des TOF-Sensors 11 fällt im Wesentlichen mit dem Erfassungsbereich 20 der Kamera 13 überein. Durch Erfassung des Abstands der Rohrabzweigung 21 zur Kamera 13 kann der Fokus der Kamera 13 auf den Abstand zu der Rohrabzweigung 21 eingestellt werden.

Bei der in Figur 6 dargestellten Ausführungsform sind verschiedene Ausgestaltungen der Sonde 3 möglich. In einer nicht dargestellten Ausführungsform kann die Sonde 3 mit einem Bowdenzug versehen sein, um eine Abbiegefunktion in die Rohrabzweigung 21 bereitzustellen. In einer noch weiteren alternativen, nicht dargestellten Ausführungsform kann die Sonde 3 mit weiteren Düsen (nicht dargestellt) ausgestattet sein, welche vom Anwender ansteuerbar sind, sodass das Druckmittel austritt, um die Sonde 3 in die Rohrabzweigung 21 zu navigieren, also eine Abbiegefunktion ermöglicht. Bezüglich weiterer Details der Anordnung und Ansteuerung der weiteren Düsen in der Sonde 3 wird auf die Offenbarung in DE 10 2009 057 284 B4 Bezug genommen.

Die Tiefenschärfe kann so eingestellt sein, dass der Bereich der Rohrabzweigung 21 vollständig beziehungsweise im Wesentlichen vollständig fokussiert wird.

Die Erfindung ist nicht auf die beschriebenen Ausführungsbeispiele beschränkt und umfasst eine Vielzahl von Abwandlungen, welche dem Fachmann im Rahmen der Ansprüche ersichtlich sind.

### BEZUGSZEICHENLISTE

1 Rohr; 2 Inspektionsfahrzeug; 3 Sonde; 4 erster Fokussierungsbereich; 5 zweiter Fokussierungsbereich; 6 Objekt; 7 Erfassungsbereich TOF-Sensor; 8 Monitor; 9 zweite Drehachse; 10 erste Drehachse; 11 TOF-Sensor; 12 Steuereinrichtung; 13 Kamera; 14 Beleuchtungseinheit; 15 Optik Beleuchtungseinheit; 16 Fokussiereinheit; 17 Lichtquelle; 18 Düse; 19 Druckmittel; 20 Erfassungsbereich Kamera; 21 Rohrabzweigung; 22 Schiebeaal; 23 Hochdruckschlauch; 24 Videosignalkabel; 25 Feder; 26 Anschluss Sonde

## Patentansprüche

1. Vorrichtung zur Inspektion und/oder Reinigung von Rohren (1) und/oder Kanälen, umfassend eine Sonde (3) und zumindest eine Messvorrichtung zum Messen einer Rohr- oder Kanalgeometrie und zum Messen eines Abstands der Sonde (3) zu einem im Rohr (1) oder Kanal befindlichen Objekt (6), wobei die Sonde (3) mit zumindest einer Kamera (13) bestückt ist und die Messvorrichtung an eine Steuereinrichtung (12) gekoppelt ist, wobei die Messvorrichtung zumindest einen TOF-Sensor (11) umfasst,
**dadurch gekennzeichnet, dass** die Steuereinrichtung (12) eingerichtet ist, um eine an die Steuereinrichtung (12) gekoppelte Fokussiereinheit (16) der Kamera und/oder eine Beleuchtungseinheit (14) anhand von Messdaten des TOF-Sensors (11) einzustellen.

2. Vorrichtung nach Anspruch 1,
**dadurch gekennzeichnet, dass** die Kamera (13) um eine zu einer Hauptachse der Sonde (3) senkrecht stehende erste Drehachse (10) dreh- oder schwenkbar an der Sonde (3) gelagert ist.

3. Vorrichtung nach einem der vorhergehenden Ansprüche,
**dadurch gekennzeichnet, dass** die Kamera (13) um eine in Hauptachse der Sonde (3) verlaufende zweite Drehachse (9) dreh- oder schwenkbar an der Sonde (3) gelagert ist.

4. Vorrichtung nach einem der vorhergehenden Ansprüche,
**dadurch gekennzeichnet, dass** die Vorrichtung zumindest eine weitere Abstandsmessvorrichtung aufweist, welche einen weiteren TOF-Sensor und/oder einen kapazitiven oder optischen Sensor, bevorzugt eine Vielzahl ringförmig um eine Hauptachse der Sonde angeordneter TOF-Sensoren, umfasst,
und die Steuereinrichtung (12) eingerichtet ist, um die Fokussiereinheit (16) und/oder die Beleuchtungseinheit (14) anhand von der weiteren Abstandsmessvorrichtung ermittelter Messdaten einzustellen,
wobei die erste Abstandsmessvorrichtung an einem nicht drehbar gelagerten Teil der Vorrichtung angeordnet ist und die zweite Abstandsmessvorrichtung an einem drehbar gelagerten Teil der Vorrichtung angeordnet ist oder umgekehrt.

5. Vorrichtung nach einem der vorhergehenden Ansprüche,
**dadurch gekennzeichnet, dass** die Fokussiereinheit (16) zumindest eine mechanisch und/oder magnetisch verstellbare Linse oder eine Flüssiglinse zur Einstellung des Fokus umfasst.

6. Vorrichtung nach einem der vorhergehenden Ansprüche,
**dadurch gekennzeichnet, dass** die Beleuchtungseinheit (14) eine oder mehrere Lichtquellen (17) umfasst und die Steuereinrichtung (12) dazu eingerichtet ist,
um die Helligkeit der Lichtquelle (17) oder Lichtquellen (17) einzeln oder in Gruppen selektiv anhand der Messdaten des TOF-Sensors (11) einzustellen, insbesondere zu dimmen oder zu erhellen, und/oder
die Lichtquelle (17) oder Lichtquellen (17) einzeln oder in Gruppen anhand der Messdaten des TOF-Sensors (11) an- und auszuschalten.

7. Vorrichtung nach Anspruch 6,
**dadurch gekennzeichnet, dass** die Beleuchtungseinheit (14) eine Vielzahl von Lichtquellen (17) umfasst, wobei die Steuereinrichtung (12) dazu eingerichtet ist, um eine Strahlformungsoptik (15) des Lichts der Lichtquellen (17) einzustellen und / oder
wobei die Vielzahl von Lichtquellen (17) ringförmig um die Kamera (13) herum an der Sonde (3) angeordnet sind und die Steuereinrichtung (12) dazu eingerichtet ist, um Ringsegmente mit mehreren Lichtquellen (17) an- und auszuschalten oder zu erhellen oder zu dimmen.

8. Vorrichtung nach Anspruch 6 oder 7,
**dadurch gekennzeichnet, dass** die Lichtquelle (17) oder Lichtquellen (17) dreh- und/oder schwenkbar an der Sonde (3) gelagert sind und die Steuereinrichtung (12) dazu eingerichtet ist, um die Lichtkegel der Lichtquelle (17) oder Lichtquellen (17) räumlich auszurichten.

9. Vorrichtung nach einem der vorhergehenden Ansprüche,
**dadurch gekennzeichnet, dass** die Sonde (3) an einem Inspektionsfahrzeug (2) angeordnet ist, um die Sonde (3) durch das Rohr (1) oder den Kanal zu bewegen, wobei der TOF-Sensor (11) an einem Fahrgestell oder an einem Hebearm des Inspektionsfahrzeugs (2) oder an der Sonde (3) angeordnet ist.

10. Vorrichtung nach einem der vorhergehenden Ansprüche 1 bis 8,
**dadurch gekennzeichnet, dass** die Sonde (3) an einem in das Rohr (1) oder den Kanal einführbaren flexiblen Schiebeaal (22) angeordnet ist, um die Sonde (3) durch das Rohr (1) bzw. den Kanal zu schieben und der TOF-Sensor (11) an der Sonde (3) angeordnet ist.

11. Vorrichtung nach einem der vorhergehenden Ansprüche 1 bis 8 oder 10,
**dadurch gekennzeichnet, dass** die Sonde (3) an einem in das Rohr (1) oder den Kanal einführbaren, als eine Leitung für ein Druckmittel ausgebildeten Hochdruckschlauch (23) angeordnet ist und der Hochdruckschlauch (23) und/oder die Sonde (3) an seinem bzw. ihrem Umfang mit Düsen (18) bestückt ist, die durch Ventile gesteuert in Druckmittel leitender Verbindung mit einer Druckmittelleitung stehen, um die Sonde (3) durch das Rohr (1) bzw. den Kanal vorzutreiben und wobei die Sonde (3) zur Navigation im Rohr (1) oder Kanal bevorzugt mit weiteren Düsen bestückt ist.

12. Verfahren zur Inspektion von Rohren (1) und/oder Kanälen unter Verwendung einer Vorrichtung nach einem der Ansprüche 1 bis 11,
wobei die mit der Kamera (13) bestückte Sonde (3) in ein Rohr (1) oder einen Kanal eingeführt wird und
wobei die Fokussiereinheit (16) der Kamera (13) anhand der Messdaten des TOF-Sensors (11) gesteuert wird, sodass bei einem vom TOF-Sensor (11) detektierten im Rohr (1) oder Kanal befindlichen Objekt (6) der Fokus der Kamera (13) auf das Objekt (6) eingestellt wird oder auf das Objekt (6) einstellbar ist und
der Fokus der Kamera (13) auf einen Bereich an einer Rohr- oder Kanalwandung eingestellt wird oder einstellbar ist, wenn der TOF-Sensor (11) kein im Rohr (1) bzw. Kanal befindliches Objekt (6) detektiert, und/oder
wobei die Beleuchtungseinheit (14) anhand der Messdaten des TOF-Sensors (11) gesteuert wird.

13. Verfahren nach Anspruch 12,
**dadurch gekennzeichnet, dass,** wenn der TOF-Sensor (11) kein im Rohr (1) oder Kanal befindliches Objekt (6) detektiert, aus den Messdaten des TOF-Sensors (11) ein Abstand der Sonde (3) zur Rohr- oder Kanalwandung ermittelt wird, der Abstand der Sonde (3) zur Rohroder Kanalwandung mit einem Faktor größer als 1 und kleiner als 20, bevorzugt größer als 1 und kleiner als 10, weiter bevorzugt größer als 1 und kleiner als 7, noch weiter bevorzugt größer als 2 und kleiner als 5 multipliziert wird und der Fokus der Kamera (13) auf den so errechneten Wert eingestellt wird oder einstellbar ist.

14. Verfahren nach Anspruch 12 oder 13,
**dadurch gekennzeichnet, dass,** die Steuereinrichtung (12) ein erstes Bilderkennungssoftwaremodul umfasst, welches eingerichtet ist, um anhand der Messdaten des TOF-Sensors (12) Deformationen, Unregelmäßigkeiten, Krümmer, Bögen und/oder Abzweigungen (21) des Rohrs (1) oder Kanals und/oder Rohr- oder Kanalverengungen oder Rohr- oder Kanalaufweitungen zu erkennen und wobei der Fokus der Kamera (13) auf einen Abstand zu einer erkannten Deformation, Unregelmäßigkeit, einem Krümmer, Bogen, einer Abzweigung (21), Rohr- oder Kanalverengung oder Rohr- oder Kanalaufweitung eingestellt wird oder einstellbar ist und/oder
wobei die Beleuchtung einer erkannten Deformation, Unregelmäßigkeit, eines Bogens, Krümmers, einer Abzweigung (21), Rohr- oder Kanalverengung oder Rohr- oder Kanalaufweitung verstärkt oder verringert wird bzw. verstärkbar oder verringerbar ist.

15. Verfahren nach einem der Ansprüche 12 bis 14,
**dadurch gekennzeichnet, dass** der TOF-Sensor (11) oder ein weiterer TOF-Sensor eine Rohr- oder Kanalsohle erfasst und das Signal des TOF-Sensors (11) oder weiteren TOF-Sensors an die Steuereinrichtung (12) übermittelt wird,
und wobei die Steuereinrichtung (12) eine Absturzwarneinheit umfasst, welche ein Signal ausgibt, wenn in der Rohr- oder Kanalsohle eine Rohr- oder Kanalabzweigung oder eine Unregelmäßigkeit erkannt wird, und/oder
wobei die Steuereinrichtung (12) ein zweites Bilderkennungssoftwaremodul umfasst, welches eingerichtet ist, einen Füllstand von Flüssigkeit im Rohr (1) oder Kanal zu ermitteln und auszugeben und/oder
wobei die Steuereinrichtung (12) ein drittes Bilderkennungssoftwaremodul umfasst, welches eingerichtet ist, eine Spurhaltung der Sondenführung zu ermöglichen.

## Claims

1. A device for inspecting and/or cleaning pipes (1) and/or channels, comprising a probe (3) and at least one measuring device for measuring a pipe or channel geometry and for measuring a distance between the probe (3) and an object (6) located in the pipe (1) or channel,
wherein the probe (3) is equipped with at least one camera (13) and the measuring device is coupled to a control device (12), wherein the measuring device comprises at least one TOF sensor (11),
**characterized in that** the control device (12) is adapted to adjust a focusing unit (16) of the camera and/or an illumination unit (14) coupled to the control device (12) on the basis of measurement data from the TOF sensor (11).

2. The device according to claim 1,
**characterized in that** the camera (13) is mounted on the probe (3) so as to be rotatable or pivotable about a first axis of rotation (10) perpendicular to a main axis of the probe (3).

3. The device according to one of the preceding claims,
**characterized in that** the camera (13) is mounted on the probe (3) so that it can rotate or pivot about a second axis of rotation (9) extending in the main axis of the probe (3).

4. The device according to one of the preceding claims,
**characterized in that** the device has at least one further distance measuring device which comprises a further TOF sensor and/or a capacitive or optical sensor, preferably a plurality of TOF sensors arranged in a ring around a main axis of the probe,
and the control device (12) is adapted to adjust the focusing unit (16) and/or the illumination unit (14) on the basis of measurement data determined by the further distance measuring device, wherein the first distance measuring device is arranged on a non-rotatably mounted part of the device and the second distance measuring device is arranged on a rotatably mounted part of the device, or vice versa.

5. The device according to one of the preceding claims,
**characterized in that** the focusing unit (16) comprises at least one mechanically and/or magnetically adjustable lens or a liquid lens for adjusting the focus.

6. The device according to one of the preceding claims,
**characterized in that** the illumination unit (14) comprises one or more light sources (17) and the control device (12) is adapted
to selectively adjust the brightness of the light source (17) or light sources (17) individually or in groups based on the measurement data from the TOF sensor (11), in particular to dim or brighten them, and/or
to switching the light source (17) or light sources (17) individually or in groups on and off based on the measurement data from the TOF sensor (11).

7. The device according to claim 6,
**characterized in that** the lighting unit (14) comprises a plurality of light sources (17), wherein the control device (12) is adapted to adjust a beam shaping optics (15) of the light of the light sources (17) and/or
wherein the plurality of light sources (17) are arranged in a ring around the camera (13) on the probe (3) and the control device (12) is adapted to switch on and off or illuminate or dim ring segments with several light sources (17).

8. The device according to claim 6 or 7,
**characterized in that** the light source (17) or light sources (17) are rotatably and/or pivotably mounted on the probe (3) and the control device (12) is adapted to spatially align the light cones of the light source (17) or light sources (17).

9. The device according to one of the preceding claims,
**characterized in that** the probe (3) is arranged on an inspection vehicle (2) in order to move the probe (3) through the pipe (1) or the channel, wherein the TOF sensor (11) is arranged on a chassis or on a lifting arm of the inspection vehicle (2) or on the probe (3).

10. The device according to one of the preceding claims 1 to 8,
**characterized in that** the probe (3) is arranged on a flexible push rod (22) that can be inserted into the pipe (1) or the channel in order to push the probe (3) through the pipe (1) or the channel, and the TOF sensor (11) is arranged on the probe (3).

11. The device according to one of the preceding claims 1 to 8 or 10,
**characterized in that** the probe (3) is arranged on a high-pressure hose (23) which can be inserted into the pipe (1) or the channel and is adapted as a conduit for a pressure medium, and the high-pressure hose (23) and/or the probe (3) is equipped on its circumference with nozzles (18) which are connected to a pressure medium line in a manner controlled by valves in order to propel the probe (3) through the pipe (1) or channel, and wherein the probe (3) is preferably equipped with further nozzles for navigation in the pipe (1) or channel.

12. A method for inspecting pipes (1) and/or channels using a device according to one of claims 1 to 11,
wherein the probe (3) equipped with the camera (13) is introduced into a pipe (1) or a channel and
wherein the focusing unit (16) of the camera (13) is controlled on the basis of the measurement data of the TOF sensor (11) so that, when an object (6) located in the pipe (1) or channel, the focus of the camera (13) is adjusted to the object (6) or can be adjusted to the object (6) and
the focus of the camera (13) is set or can be set to an area on a pipe or channel wall when the TOF sensor (11) does not detect an object (6) located in the pipe (1) or channel, and/or
wherein the lighting unit (14) is controlled on the basis of the measurement data of the TOF sensor (11).

13. The method according to claim 12,
**characterized in that,** if the TOF sensor (11) detects no object (6) located in the pipe (1) or channel, a distance between the probe (3) and the pipe or channel wall is determined from the measurement data of the TOF sensor (11), the distance between the probe (3) and the pipe or channel wall is multiplied by a factor greater than 1 and less than 20, preferably greater than 1 and less than 10, more preferably greater than 1 and less than 7, even more preferably greater than 2 and less than 5, and the focus of the camera (13) is set or can be set to the value calculated in this way.

14. The method according to claim 12 or 13,
**characterized in that** the control device (12) comprises a first image recognition software module which is adapted to detect, on the basis of the measurement data from the TOF sensor (129), deformations, irregularities, bends, bows and/or branches (21) of the pipe (1) or channel, and/or pipe or channel constrictions or pipe or channel expansions, and wherein the focus of the camera (13) is set or is adjustable to a distance from a detected deformation, irregularity, bend, bow, branch (21), pipe or channel constriction or pipe or channel widening, and/or
wherein the illumination of a detected deformation, irregularity, bend, bow, branch (21), pipe or channel constriction or pipe or channel widening is increased or decreased or can be increased or decreased.

15. The method according to any of claims 12 to 14,
**characterized in that** the TOF sensor (11) or a further TOF sensor detects a pipe or channel base and the signal from the TOF sensor (11) or further TOF sensors is transmitted to the control device (12),
and wherein the control device (12) comprises a fall warning unit which outputs a signal when a pipe or channel branch or an irregularity is detected in the pipe or channel base, and/or
wherein the control device (12) comprises a second image recognition software module which is adapted to determine and output a liquid level in the pipe (1) or channel and/or
wherein the control device (12) comprises a third image recognition software module which is adapted to enable tracking of the probe guide.

## Revendications

1. Dispositif d'inspection et/ou de nettoyage de tuyaux (1) et/ou de canalisations, comprenant une sonde (3) et au moins un dispositif de mesure pour mesurer la géométrie d'un tuyau ou d'une canalisation et pour mesurer une distance entre la sonde (3) et un objet (6) se trouvant dans le tuyau (1) ou la canalisation, dans lequel la sonde (3) est équipée d'au moins une caméra (13) et le dispositif de mesure est couplé à un dispositif de commande (12), le dispositif de mesure comprenant au moins un capteur TOF (11),
**caractérisé en ce**
**que** le dispositif de commande (12) est conçu pour régler une unité de mise au point (16) de la caméra couplée au dispositif de commande (12) et/ou une unité d'éclairage (14) à l'aide de données de mesure du capteur TOF (11).

2. Dispositif selon la revendication 1,
**caractérisé en ce que** la caméra (13) est montée sur la sonde (3) de manière à pouvoir tourner ou pivoter autour d'un premier axe de rotation (10) perpendiculaire à un axe principal de la sonde (3).

3. Dispositif selon l'une des revendications précédentes,
**caractérisé en ce que** la caméra (13) est montée sur la sonde (3) de manière à pouvoir tourner ou pivoter autour d'un deuxième axe de rotation (9) s'étendant suivant l'axe principal de la sonde (3).

4. Dispositif selon l'une des revendications précédentes,
**caractérisé en ce que** le dispositif présente au moins un autre dispositif de mesure de distance qui comprend un autre capteur TOF et/ou un capteur capacitif ou optique, de préférence une pluralité de capteurs TOF disposés en anneau autour d'un axe principal de la sonde,
et le dispositif de commande (12) est conçu pour régler l'unité de mise au point (16) et/ou l'unité d'éclairage (14) à l'aide de données de mesure déterminées par l'autre dispositif de mesure de distance,
dans lequel le premier dispositif de mesure de distance est disposé sur une partie montée non tournante du dispositif et le deuxième dispositif de mesure de distance est disposé sur une partie montée tournante du dispositif ou inversement.

5. Dispositif selon l'une des revendications précédentes,
**caractérisé en ce que** l'unité de mise au point (16) comprend au moins une lentille réglable mécaniquement et/ou magnétiquement ou une lentille liquide pour régler la mise au point.

6. Dispositif selon l'une des revendications précédentes,
**caractérisé en ce que** l'unité d'éclairage (14) comprend une ou plusieurs sources lumineuses (17) et le dispositif de commande (12) est conçu
pour régler la luminosité de la source lumineuse (17) ou des sources lumineuses (17) individuellement ou par groupes de manière sélective à l'aide des données de mesure du capteur TOF (11), en particulier pour la réduire ou l'augmenter, et/ou
pour allumer et éteindre la source lumineuse (17) ou les sources lumineuses (17) individuellement ou par groupes à l'aide des données de mesure du capteur TOF (11).

7. Dispositif selon la revendication 6,
**caractérisé en ce que** l'unité d'éclairage (14) comprend une pluralité de sources lumineuses (17), dans lequel le dispositif de commande (12) est conçu pour régler une optique de mise en forme de faisceau (15) de la lumière des sources lumineuses (17) et/ou
dans lequel la pluralité de sources lumineuses (17) sont disposées en anneau autour de la caméra (13) sur la sonde (3) et le dispositif de commande (12) est conçu pour allumer et éteindre ou augmenter ou réduire la luminosité de segments annulaires comportant plusieurs sources lumineuses (17).

8. Dispositif selon la revendication 6 ou 7,
**caractérisé en ce que** la source lumineuse (17) ou les sources lumineuses (17) sont montées de manière à pouvoir tourner et/ou pivoter sur la sonde (3) et le dispositif de commande (12) est conçu pour orienter spatialement les cônes lumineux de la source lumineuse (17) ou des sources lumineuses (17).

9. Dispositif selon l'une des revendications précédentes,
**caractérisé en ce que** la sonde (3) est disposée sur un véhicule d'inspection (2) afin de déplacer la sonde (3) à travers le tuyau (1) ou la canalisation, dans lequel le capteur TOF (11) est disposé sur un châssis ou sur un bras de levage du véhicule d'inspection (2) ou sur la sonde (3).

10. Dispositif selon l'une des revendications précédentes 1 à 8,
**caractérisé en ce que** la sonde (3) est disposée sur un jonc de poussée flexible (22) pouvant être introduit dans le tuyau (1) ou la canalisation afin de pousser la sonde (3) à travers le tuyau (1) ou la canalisation, et le capteur TOF (11) est disposé sur la sonde (3).

11. Dispositif selon l'une des revendications précédentes 1 à 8 ou 10,
**caractérisé en ce que** la sonde (3) est disposée sur un tuyau flexible haute pression (23) formant une conduite pour un fluide sous pression et pouvant être introduit dans le tuyau (1) ou la canalisation, et le tuyau flexible haute pression (23) et/ou la sonde (3) sont équipés sur leur pourtour de buses (18) qui sont en communication avec une conduite de fluide sous pression de manière commandée par des vannes afin de faire avancer la sonde (3) à travers le tuyau (1) ou la canalisation, et dans lequel la sonde (3) est de préférence équipée de buses supplémentaires pour la navigation dans le tuyau (1) ou la canalisation.

12. Procédé d'inspection de tuyaux (1) et/ou de canalisations à l'aide d'un dispositif selon l'une des revendications 1 à 11,
dans lequel la sonde (3) équipée de la caméra (13) est introduite dans un tuyau (1) ou une canalisation et
dans lequel l'unité de mise au point (16) de la caméra (13) est commandée à l'aide des données de mesure du capteur TOF (11) de telle sorte que, lorsqu'un objet (6) se trouvant dans le tuyau (1) ou la canalisation est détecté par le capteur TOF (11), la mise au point de la caméra (13) est réglée sur l'objet (6) ou peut être réglée sur l'objet (6) et
la mise au point de la caméra (13) est réglée ou peut être réglée sur une zone située sur une paroi de tuyau ou de canalisation lorsque le capteur TOF (11) ne détecte aucun objet (6) se trouvant dans le tuyau (1) ou la canalisation, et/ou
dans lequel l'unité d'éclairage (14) est commandée à l'aide des données de mesure du capteur TOF (11).

13. Procédé selon la revendication 12,
**caractérisé en ce que**, lorsque le capteur TOF (11) ne détecte aucun objet (6) se trouvant dans le tuyau (1) ou la canalisation, une distance entre la sonde (3) et la paroi de tuyau ou de canalisation est déterminée à partir des données de mesure du capteur TOF (11), la distance entre la sonde (3) et la paroi de tuyau ou de canalisation est multipliée par un facteur supérieur à 1 et inférieur à 20, de préférence supérieur à 1 et inférieur à 10, plus préférablement supérieur à 1 et inférieur à 7, encore plus préférablement supérieur à 2 et inférieur à 5, et la mise au point de la caméra (13) est réglée ou peut être réglée sur la valeur ainsi calculée.

14. Procédé selon la revendication 12 ou 13,
**caractérisé en ce que** le dispositif de commande (12) comprend un premier module logiciel de reconnaissance d'images qui est conçu pour détecter, à l'aide des données de mesure du capteur TOF (12), des déformations, des irrégularités, des coudes, des courbures et/ou des ramifications (21) du tuyau (1) ou de la canalisation et/ou des rétrécissements ou des élargissements de tuyau ou de canalisation, et dans lequel la mise au point de la caméra (13) est réglée ou peut être réglée sur une distance par rapport à une déformation, une irrégularité, un coude, une courbure, une ramification (21), un rétrécissement ou un élargissement de tuyau ou de canalisation détectés, et/ou
dans lequel l'éclairage d'une déformation, d'une irrégularité, d'un coude, d'une courbure, d'une ramification (21), d'un rétrécissement ou d'un élargissement de tuyau ou de canalisation détectés est renforcé ou réduit ou peut être renforcé ou réduit.

15. Procédé selon l'une des revendications 12 à 14,
**caractérisé en ce que** le capteur TOF (11) ou un autre capteur TOF détecte un radier de tuyau ou de canalisation et le signal du capteur TOF (11) ou de l'autre capteur TOF est transmis au dispositif de commande (12),
et dans lequel le dispositif de commande (12) comprend une unité d'avertissement de chute qui émet un signal lorsqu'une ramification de tuyau ou de canalisation ou une irrégularité est détectée dans le radier de tuyau ou de canalisation, et/ou
dans lequel le dispositif de commande (12) comprend un deuxième module logiciel de reconnaissance d'images qui est conçu pour déterminer et transmettre un niveau de remplissage de liquide dans le tuyau (1) ou la canalisation et/ou
dans lequel le dispositif de commande (12) comprend un troisième module logiciel de reconnaissance d'images qui est conçu pour permettre un suivi du guidage de sonde.
